# EUROPÄISCHE PATENTSCHRIFT

(11) **EP 2 795 168 B1**
(45) Veröffentlichungstag und Bekanntmachung des Hinweises auf die Patenterteilung: **23.12.2015**
(21) Anmeldenummer: 13701911.3
(22) Anmeldetag: 18.01.2013
(51) Int. Cl.: F16K 3/02, F16K 27/04

(54) **VENTIL ZUR FLUIDSTEUERUNG**
VALVE FOR FLUID CONTROL
VANNE DE COMMANDE DE FLUIDE

(30) Priorität: 01.03.2012 DE 102012004296
(43) Veröffentlichungstag der Anmeldung: 29.10.2014
(73) Patentinhaber: Festo AG & Co. KG, 73734 Esslingen (DE)
(72) Erfinder: JACHMANN, Robert, 73099 Adelberg (DE); PESCHEL, Jörg, 73728 Esslingen (DE)
(74) Vertreter: Patentanwälte Magenbauer & Kollegen Partnerschaft mbB
(86) Internationale Anmeldenummer: PCT/EP2013/000150
(87) Internationale Veröffentlichungsnummer: WO 2013/127482

(56) Entgegenhaltungen:
- EP-B1- 0 052 703
- WO-A1-97/05412
- US-A- 4 795 128

## Beschreibung

Die Erfindung betrifft ein Ventil zur Fluidsteuerung, mit einem Ventilgehäuse, das eine Ventilkammer definiert, in der sich zwei Kanalmündungen zweier Fluidkanäle in einer Hauptrichtung mit Abstand gegenüberliegen und in der sich zwischen den beiden Kanalmündungen ein Steuerabschnitt eines Ventilschiebers erstreckt, der zur Einstellung verschiedener Betriebsstellungen in einer zu der Hauptrichtung rechtwinkeligen Verstellrichtung relativ zum Ventilgehäuse linear hin und her verschiebbar ist, wobei sich an seinen Steuerabschnitt in der Verstellrichtung axial beidseits jeweils ein zur Einleitung von Verschiebekräften nutzbarer Antriebsabschnitt anschließt.

Ein aus der EP 0 052 703 B1 bekanntes Ventil dieser Art ist als Plattenschieber konzipiert und kann mittels Fluidkraft betätigt werden. Es enthält ein Ventilgehäuse, in dem ein Ventilschieber linear verschiebbar angeordnet ist, der mit einem Steuerabschnitt zwischen zwei sich in einer Hauptrichtung gegenüberliegende Kanalmündungen zweier Fluidkanäle eingreift. Der Steuerabschnitt hat einen Durchlassabschnitt mit einer Durchlassöffnung und einem komplett geschlossenen Trennabschnitt. Je nach Betriebsstellung des Ventilschiebers stehen die beiden Fluidkanäle miteinander in Verbindung oder sind voneinander abgetrennt. Zur Betätigung des Ventilschiebers befindet sich an den beiden Endbereichen des Steuerabschnittes jeweils ein als Kolben ausgebildeter Antriebsabschnitt, der mit einem Betätigungsfluid beaufschlagbar ist, um den Ventilschieber mittels Fluidkraft umzuschalten. Aufgrund seiner Konzeption eignet sich dieses bekannte Ventil nicht zur manuellen Bedienung. Ohne ein bereitstehendes Druckfluid kann die Betriebsstellung des Ventilschiebers nicht verändert werden.

Aus der EP 0 979 966 A2 ist ein für manuelle Betätigung ausgelegtes Mehrwegeventil bekannt, das über ein in einem Ventilgehäuse verdrehbar aufgenommenes Ventilglied verfügt, dessen Betriebsstellung durch Verdrehen mittels eines mit einer Hand ergreifbaren Betätigungsgliedes verändert werden kann. Der Nachteil eines solchen Mehrwegeventils mit verdrehbarem Ventilglied liegt unter anderem darin, dass das in einer Offenstellung durch das Ventilglied hindurchtretende Fluid eine das Strömungsverhalten beeinflussende Umlenkung erfährt.

Ein ebenfalls manuell betätigbares Ventil mit einem verdrehbaren Ventilglied offenbart die DE 19926043 A1. Dieses Ventil ist im Bereich seines Betätigungsgliedes mit Mitteln ausgestattet, die eine lösbare Verriegelung der jeweils eingestellten Betriebsstellung ermöglichen.

Aus der DE 1 963 665 U ist ein Mehrwege-Flachschieber bekannt, der über ein durch Verschwenken um eine Schwenkachse verstellbares Ventilglied verfügt.

Aus der DE 31 070 12 A1 ist ein Schieberventil bekannt, das einen in einem Ventilgehäuse linear verschiebbar angeordneten Kolbenschieber aufweist, der in einer Offenstellung positionierbar ist, in der er von einem Fluid umströmt werden kann, um einen Verbraucher mit einem Druckmedium zu versorgen.

Gemäß DE 44 13 657 C1 enthält eine Ventilanordnung einen durch Vorsteuerventile elektropneumatisch betätigbaren Kolbenschieber, der außerdem auch mittels zweier seinen Stirnseiten zugeordneter Handbetätigungseinrichtungen manuell betätigbar ist. Die Handbetätigungseinrichtungen enthalten jeweils einen aus dem Ventilgehäuse herausragenden Betätigungsstößel, auf den mit den Fingern einer Hand eine Kraft ausübbar ist, die als Stellkraft auf den Ventilschieber übertragbar ist.

In der DE 37 31 177 A1 ist eine als Ventil einsetzbare Stellvorrichtung beschrieben, die über einen Ventilschieber verfügt, der mittels einer aus dem Ventilgehäuse herausragenden Betätigungsstange hin und her verschoben werden kann, um unterschiedliche Betriebsstellungen vorzugeben.

Die DE 20 2006 006 930 U1 offenbart einen Verbinder zur Herstellung einer sterilen Verbindung, bei dem eine Verschiebeeinrichtung rechtwinkelig zu den Achsrichtungen zweier Fluidkanäle relativ zu einer komplementären Verschiebeeinrichtung linear hin und her verschiebbar ist, um eine Fluidverbindung zwischen den beiden Fluidkanälen wahlweise freizugeben oder abzusperren. Die Verschiebeeinrichtung umgreift dabei die komplementäre Verschiebeeinrichtung mit einer U-förmigen Führungswand.

Der Erfindung liegt die Aufgabe zugrunde, ein auf einfache Weise manuell betätigbares und hinsichtlich der eingenommenen Betriebsstellung leicht überprüfbares Ventil zur Fluidsteuerung zu schaffen.

Diese Aufgabe wird in Verbindung mit den eingangs genannten Merkmalen dadurch gelöst, dass der Ventilschieber mindestens einen das Ventilgehäuse in einer zu der Hauptrichtung rechtwinkeligen Ebene außen partiell umgreifenden U-förmigen Handhabungsbügel aufweist, dessen zwei Bügelschenkel mit jeweils einem der beiden Antriebsabschnitte verbunden sind.

Auf diese Weise kann die Betriebsstellung des Ventilschiebers sehr einfach durch eine Manipulation an dem mindestens einen Handhabungsbügel verändert werden. Der Handhabungsbügel bietet eine große Angriffsfläche zur manuellen Betätigung, wobei sich insbesondere die beiden Bügelschenkel dafür eignen, eine drückende Betätigungskraft manuell einzuleiten, um den Ventilschieber in eine andere Betriebsstellung zu verschieben. Der Handhabungsbügel bildet zusammen mit dem Steuerabschnitt und den Antriebsabschnitten eine rahmenartige Struktur, die dem Ventilglied eine hohe Stabilität verleiht. Darüber hinaus kann die momentan eingenommene Betriebsstellung des Ventilschiebers sehr einfach anhand der nicht zu übersehenden, relativ zum Ventilgehäuse eingenommenen Position des Handhabungsbügels verifiziert werden.

Vorteilhafte Weiterbildungen der Erfindung gehen aus den Unteransprüchen hervor.

Als besonders zweckmäßig wird es angesehen, wenn der Ventilschieber über nicht nur einen, sondern über zwei Handhabungsbügel verfügt, die das Ventilgehäuse auf einander entgegengesetzten Seiten umgreifen, so dass jedem Antriebsabschnitt des Ventilschiebers jeweils zwei in einander entgegengesetzte Richtungen abgehende Bügelschenkel zugeordnet sind, die jeweils zu einem der beiden Handhabungsbügel gehören. Diese beiden Handhabungsbügel sind zweckmäßigerweise identisch gestaltet, so dass sich zweckmäßigerweise bezüglich des Steuerabschnittes eine spiegelsymmetrische Gestaltung ergibt. Ein derartiges Ventil zeichnet sich durch eine besonders hohe Stabilität des Ventilschiebers aus und durch eine besonders gute Sichtbarkeit der aktuellen Betriebsstellung aus praktisch allen Blickwinkeln.

Die beiden Handhabungsbügel sind insbesondere derart gestaltet, dass sie gemeinsam einen in sich geschlossenen, das Ventilgehäuse in einer zu der Hauptrichtung rechtwinkeligen Ebene vollständig umschließenden Handhabungsrahmen bilden, der vorzugsweise eine zumindest im Wesentlichen rechteckige Gestalt hat. Der Steuerabschnitt ist über die beiden Antriebsabschnitte nach Art eines Mittelsteges in den Handhabungsrahmen eingegliedert.

Zweckmäßigerweise ragen die beiden Antriebsabschnitte des Ventilschiebers auf einander entgegengesetzten Seiten aus dem Ventilgehäuse heraus und sind außerhalb des Ventilgehäuses mit jedem zugeordneten Bügelschenkel beziehungsweise dem gegebenenfalls vorhandenen Handhabungsrahmen verbunden.

Vorzugsweise werden die Abmessungen des Ventilschiebers in der Verstellrichtung so bemessen, dass jeder vorhandene Handhabungsbügel in jeder von zwei einander entgegengesetzten Betriebsstellungen des Ventilschiebers derart bezüglich des Ventilgehäuses vorsteht, dass mindestens eine Sicherungsöse gebildet wird, die es erlaubt, ein Sicherungselement um den Bügelkörper herumzulegen, das ein Verschieben des Ventilschiebers blockiert. Ein solches Sicherungselement kann beispielsweise ein Bügelschloss sein. Mithin lässt sich das Ventil sehr einfach gegen unautorisierte Benutzung sichern.

Vorzugsweise ist der Ventilschieber so gestaltet, dass er zwei Betriebsstellungen einnehmen kann, in denen jeweils ein Bügelschenkel jedes Handhabungsbügels an das Ventilgehäuse angenähert ist, und zwar derart, dass er in dem Ventilgehäuse versenkt zu liegen kommt. Vorzugsweise schließt der betreffende Bügelschenkel hierbei bündig mit der ihm benachbarten Außenfläche des Ventilgehäuses ab.

Eine optimale Linearführung und Stabilisierung des Ventilschiebers bezüglich des Ventilgehäuses kann dadurch realisiert werden, dass jeder Handhabungsbügel mit dem seine beiden Bügelschenkel verbindenden Bügelsteg in eine außen am Ventilgehäuse ausgebildete Führungsnut linear verschiebbar eingreift, wobei er zweckmäßigerweise von den Nutflanken dieser Führungsnut seitlich gleitverschieblich abgestützt wird.

Der vorgenannte Bügelsteg mindestens eines Handhabungsbügels kann in vorteilhafter Weise dazu genutzt werden, den Ventilschieber in mindestens einer Betriebsstellung bezüglich des Ventilgehäuses lösbar verrastend zu fixieren. Es kann insbesondere mindestens ein Rastmittel an der dem Ventilgehäuse zugewandten Innenfläche des Bügelsteges vorhanden sein, das alternativ mit zwei an der Außenfläche des Ventilgehäuses ausgebildeten Gegenrastmitteln in Eingriff gelangt, je nachdem, welche von zwei möglichen Betriebsstellungen momentan vorliegt. Mittels einer solchen Verrastung ist sichergestellt, dass der Ventilschieber im Falle von Vibrationen seine Betriebsstellung nicht unerwünscht ändert.

Der mindestens eine Handhabungsbügel eignet sich auch sehr gut dafür, mindestens eine und zweckmäßigerweise mehrere Markierung(en) anzubringen, anhand derer sich die momentan eingenommene Betriebsstellung optimal ablesen lässt. An mindestens einem Bügelsteg befindet sich zweckmäßigerweise eine der Anzahl der möglichen Betriebsstellungen entsprechende Anzahl von Markierungen, die die Verschiebebewegung des Ventilschiebers mitmachen und die je nach eingenommener Betriebsstellung alternativ einer am Ventilgehäuse angeordneten Bezugsmarkierung zugeordnet sind. Den Anzeigemarkierungen können beispielsweise Symbole oder Beschriftungen im Sinne von "Offen" oder "Geschlossen" zugeordnet sein, so dass die aktuell eingenommene Betriebsposition jederzeit zweifelsfrei ermittelt werden kann.

Vorzugsweise ist der den Handhabungsbügel bildende, sich aus den beiden Bügelschenkeln und einem dazwischen verlaufenden Bügelsteg zusammensetzende Bügelkörper mit einer flachen, bevorzugt rechteckigen Querschnittskontur versehen. Dadurch können sehr kompakte Abmessungen des Ventils verwirklicht werden. Der Bügelkörper des Handhabungsbügels hat vorzugsweise eine bandförmige, zur Bildung der U-Konfiguration abgewinkelte Struktur.

Das Ventilgehäuse setzt sich zweckmäßigerweise aus zwei jeweils eine der sich gegenüberliegenden Kanalmündungen aufweisenden Gehäusekörpern zusammen, die in einem Fügebereich aneinandergesetzt sind und die beispielsweise durch Schrauben oder durch andere Befestigungsmittel miteinander verbunden sind. In diesem Zusammenhang kann ein Ventilglied, das über zwei Handhabungsbügel und insbesondere über einen Handhabungsrahmen verfügt, eine Abdeckfunktion übernehmen und den Fügebereich so abdecken, dass er für einen Betrachter des Ventils unbemerkt bleibt und das Ventilgehäuse den Eindruck eines monolithischen Aufbaus vermittelt.

Der Ventilschieber ist insbesondere so ausgebildet, dass er in der Verstellrichtung aufeinanderfolgend über einen Durchlassabschnitt und über einen Trennabschnitt verfügt. In dem Durchlassabschnitt weist er eine den Steuerabschnitt in der Hauptrichtung durchsetzende Durchlassöffnung auf, während er in dem Trennabschnitt fluidundurchlässig ausgebildet ist. Der Ventilschieber kann alternativ in zwei möglichen Betriebsstellungen positioniert werden, bei denen es sich zum einen um eine Offenstellung und zum anderen um eine Trennstellung handelt. In der Offenstellung liegt die Durchlassöffnung zwischen den beiden Kanalmündungen und ermöglicht einen Fluiddurchlass zwischen den beiden Fluidkanälen. In der Trennstellung liegt der Trennabschnitt zwischen den beiden Kanalmündungen und trennt diese so voneinander ab, dass ein Fluidübertritt zwischen den beiden Fluidkanälen verhindert ist.

In einer Ausgestaltung als 2/2-Wegeventil übernimmt der Trennabschnitt ausschließlich die schon erwähnte Trennfunktion. In einer vorteilhaften alternativen Ausgestaltung als 2/3-Wegeventil ist der Trennabschnitt so ausgebildet, dass er unter Beibehaltung der gegenseitigen Abtrennung der beiden Fluidkanäle eine Entlüftung des einen dieser beiden Fluidkanäle ermöglicht. In diesem Fall erstreckt sich durch den Steuerabschnitt hindurch ein Entlüftungskanal, der einerseits mit der Atmosphäre kommuniziert und andererseits so an einer Seite des Trennabschnittes ausmündet, dass er in der Trennstellung mit dem einen der beiden Fluidkanäle in Fluidverbindung steht. Somit kann in diesem Fluidkanal befindliche Druckluft in der Trennstellung des Ventilschiebers zur Atmosphäre entlüftet werden.

Bevorzugt ist der Ventilschieber zumindest im Bereich des Steuerabschnittes als Hohlkörper ausgebildet, der einen Hohlraum begrenzt, der den Entlüftungskanal bildet.

Für den Steuerabschnitt empfiehlt sich insgesamt eine plattenförmige Gestaltung, in Verbindung mit einer dahingehenden Ausrichtung, dass seine Plattenebene rechtwinkelig zu der Hauptrichtung verläuft. Auf diese Weise kann das Ventil in der Hauptrichtung bei Bedarf mit sehr geringen Abmessungen realisiert werden.

Nachfolgend wird die Erfindung anhand der beiliegenden Zeichnung näher erläutert. In dieser zeigen:
- Figur 1: eine perspektivische Ansicht einer bevorzugten Ausführungsform des erfindungsgemäßen Ventils, wobei der Ventilschieber bei Einnahme einer eine Offenstellung bildenden Betriebsstellung gezeigt ist,
- Figur 2: das Ventil aus Figur 1 im Längsschnitt gemäß Schnittlinie II-II aus Figuren 1, 3 und 4,
- Figur 3: das Ventil aus Figur 1 in einem Längsschnitt gemäß Schnittlinie III-III aus Figur 2,
- Figur 4: das Ventil aus Figur 1 in einem Querschnitt gemäß Schnittlinie IV-IV aus Figuren 2 und 3,
- Figur 5: das Ventil aus Figuren 1 bis 4 in einer perspektivischen Ansicht, wobei der Ventilschieber bei Einnahme einer eine Trennstellung definierenden Betriebsstellung gezeigt ist,
- Figur 6: das Ventil aus Figur 5 im Längsschnitt gemäß Schnittlinie VI-VI aus Figuren 5, 7 und 8,
- Figur 7: das Ventil aus Figur 5 in einem Längsschnitt gemäß Schnittlinie VII-VII aus Figur 6 und
- Figur 8: einen Querschnitt durch das Ventil gemäß Schnittlinie VIII-VIII aus Figuren 6 und 7.

Das in seiner Gesamtheit mit Bezugsziffer 1 bezeichnete Ventil dient zur Steuerung der Strömung eines Fluides zwischen einem ersten Fluidkanal 2 und einem zweiten Fluidkanal 3. Bei dem zu steuernden Fluid handelt es sich insbesondere um Druckluft, wenngleich das Ventil 1 zur Steuerung jedweden fließfähigen Mediums nutzbar ist.

Das Ventil 1 enthält ein Ventilgehäuse 4, das eine bevorzugt im Wesentlichen schlitzförmige Ventilkammer 5 definiert, in die die beiden Fluidkanäle 2, 3 mit sich in einer Hauptrichtung 10 gegenüberliegenden ersten und zweiten Kanalmündungen 6, 7 einmünden. Die beiden Fluidkanäle 2, 3 durchsetzen das Ventilgehäuse 4 und münden mit je einer Anschlussöffnung 2a, 3a zur Außenfläche des Ventilgehäuses 4 aus. Vorzugsweise erstrecken sich die beiden Fluidkanäle 2, 3 koaxial zueinander, wobei die Ausrichtung ihrer Längsachse mit der Hauptrichtung 10 zusammenfällt.

In einer bevorzugten Betriebsweise des Ventils 1 wird der erste Fluidkanal 2 als mit einer Druckquelle verbundener Primärkanal und der zweite Fluidkanal 3 als mit einem Verbraucher zu verbindender oder verbundener Sekundärkanal genutzt.

Das Ventil 1 enthält des Weiteren einen bezüglich des Ventilgehäuses 4 separaten Ventilschieber 8, der relativ zu dem Ventilgehäuse 4 in einer zu der Hauptrichtung 10 rechtwinkeligen Verstellrichtung 12 linear hin und her verschiebbar ist. Die hierbei stattfindende Linearbewegung sei im Folgenden als Umschaltbewegung 13 bezeichnet und ist in der Zeichnung durch einen Doppelpfeil illustriert.

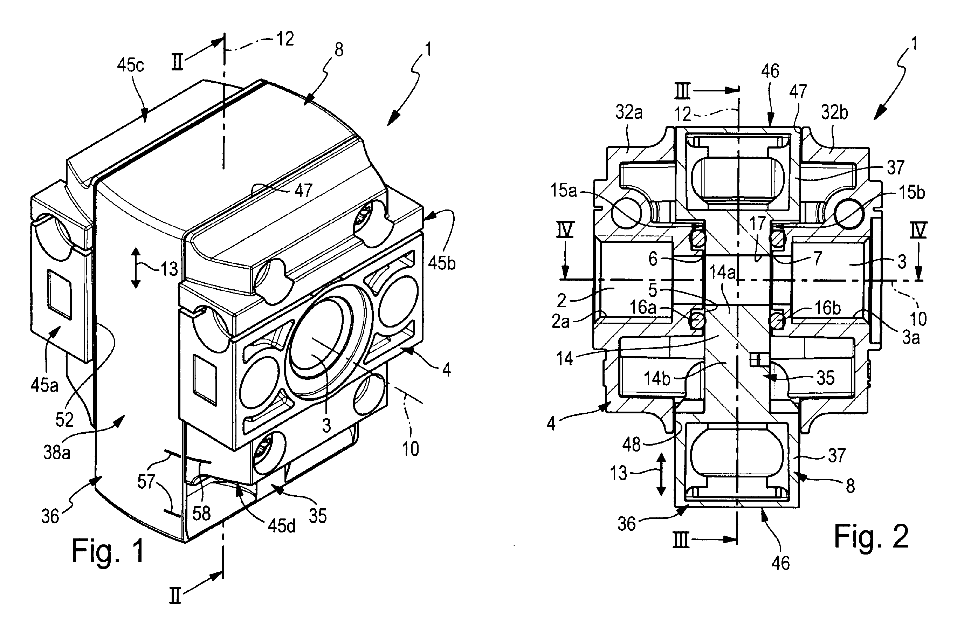

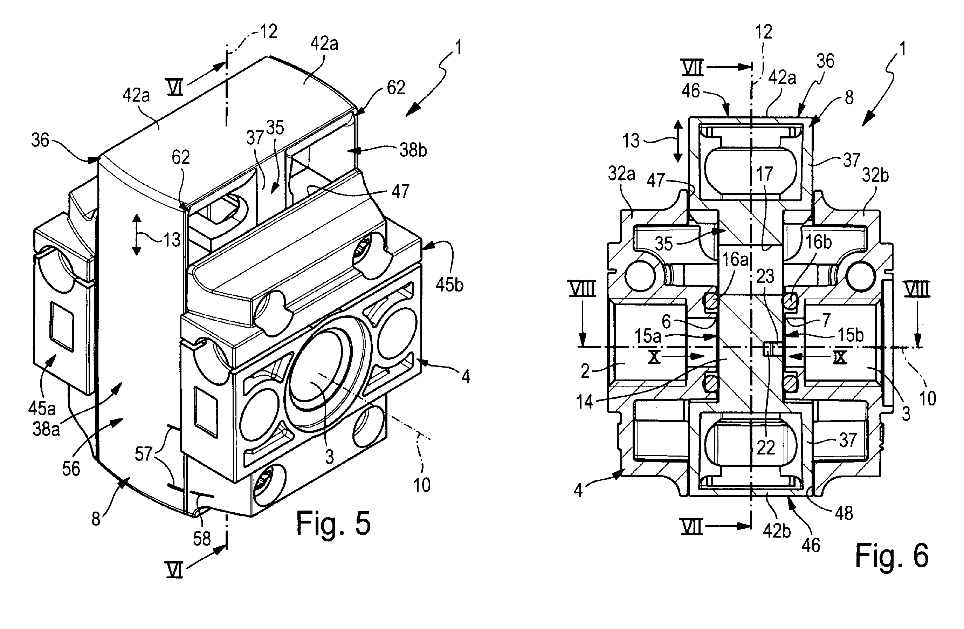

Der Ventilschieber 8 kann im Rahmen der Umschaltbewegung 13 alternativ in jeweils einer von mehreren Betriebsstellungen positioniert werden. Exemplarisch sind zwei Betriebsstellungen des Ventilschiebers 8 möglich, bei denen es sich um eine in Figuren 1 bis 4 gezeigte Offenstellung und um eine in Figuren 5 bis 8 gezeigte Trennstellung handelt. In der Offenstellung schafft der Ventilschieber 8 eine ungehinderte Fluidverbindung zwischen den beiden Fluidkanälen 2, 3, die er in der Trennstellung unterbricht.

Der Ventilschieber 8 verfügt über einen bevorzugt plattenförmig ausgebildeten Steuerabschnitt 14, der sich mit rechtwinkelig zu der Hauptrichtung 10 orientierter Plattenebene in der Ventilkammer 5 zwischen den beiden Kanalmündungen 6, 7 erstreckt. Er hat zwei einander entgegengesetzt in der Hauptrichtung 10 orientierte erste und zweite Steuerflächen 15a, 15b, von denen die erste Steuerfläche 15a der ersten Kanalmündung 6 und die zweite Steuerfläche 15b der zweiten Kanalmündung 7 zugewandt ist. Um jede Kanalmündung 6, 7 herum erstreckt sich ein ortsfest am Ventilgehäuse 4 angeordnetes ringförmiges Dichtelement 16a, 16b, das gleitverschieblich an der jeweils zugeordneten ersten beziehungsweise zweiten Steuerfläche 15a, 15b anliegt. Bei Ausführung der Umschaltbewegung 13 gleitet der Ventilschieber 8 mit den beiden Steuerflächen 15a, 15b am jeweils zugeordneten Dichtelement 16a, 16b ab.

Der Steuerabschnitt 14 ist in der Verstellrichtung 12 in einen Durchlassabschnitt 14a und einen Trennabschnitt 14b eingeteilt. Diese beiden Abschnitte gehen fließend ineinander über. In dem Durchlassabschnitt 14a ist der Steuerabschnitt 14 in der Hauptrichtung 10, also rechtwinkelig zu seiner Plattenebene, von einer Durchlassöffnung 17 durchsetzt. Diese Durchlassöffnung 17 ist beim Ausführungsbeispiel von einem Durchlasskanal gebildet. Sie mündet derart zu den beiden Steuerflächen 15a, 15b aus, dass sie in der aus Figuren 1 bis 4 ersichtlichen Offenstellung des Ventilschiebers 8 insbesondere koaxial mit den beiden Kanalmündungen 6, 7 fluchtet. Somit kann in dieser Offenstellung ein in den ersten Fluidkanal 2 eingespeistes Druckmedium durch die Durchlassöffnung 17 hindurch in den zweiten Fluidkanal 3 und von dort zu dem angeschlossenen Verbraucher strömen.

Im Bereich des Trennabschnittes 14b ist der Steuerabschnitt 14 in der Hauptrichtung 10 fluidundurchlässig ausgebildet. Er verfügt hierzu beim Ausführungsbeispiel über eine die erste Steuerfläche 15a definierende geschlossene Trennwand 18, die in der Trennstellung die erste Kanalmündung 6 überdeckt und mit Dichtkontakt an dem die erste Kanalmündung 6 umrahmenden Dichtelement 16a anliegt. Auf diese Weise ist ein in den ersten Fluidkanal 2 eingespeistes Druckmedium daran gehindert, in die Ventilkammer 5 einzutreten beziehungsweise in den zweiten Fluidkanal 3 überzuströmen.

Der Trennabschnitt 14b ist bei einer nicht illustrierten Ausführungsform des Ventils 1 so ausgebildet, dass er in der Trennstellung auch mit dem die zweite Kanalmündung 7 umrahmenden Dichtelement 16b in Dichtkontakt steht, so dass der zweite Fluidkanal 3 zur Ventilkammer 5 hin ebenfalls abgesperrt ist. Ein derart ausgebildetes Ventil wird als reines Absperrventil ohne Entlüftungsfunktion eingesetzt und verfügt über eine 2/2-Ventilfunktionalität.

Das Ventil 1 des Ausführungsbeispiels bietet hingegen die Möglichkeit zur Entlüftung des zweiten Fluidkanals 3 in der Schließstellung des Ventilschiebers 8. Dementsprechend handelt es sich hier um ein Ventil mit einer 3/2-Ventilfunktionalität. Um dies zu gewährleisten, ist der Ventilschieber 8 mit einem sich zumindest im Innern des Steuerabschnittes 14 erstreckenden Entlüftungskanal 22 ausgestattet.

Der Entlüftungskanal 22 hat eine im Bereich des Durchlassabschnittes 14a zu der zweiten Steuerfläche 15b ausmündende Entlüftungsöffnung 23. In der Trennstellung des Ventilschiebers 8 liegt die Entlüftungsöffnung 23 der zweiten Kanalmündung 7 fluchtend gegenüber, so dass eine Fluidverbindung zwischen dem zweiten Fluidkanal 3 und dem Entlüftungskanal 22 vorliegt. Der Entlüftungskanal 22 erstreckt sich im Innern des Ventilschiebers 8 zunächst durch den Steuerabschnitt 14 hindurch und mündet schließlich über mindestens eine an dem Ventilschieber 8 ausgebildete Austrittsöffnung 24 zur umgebenden Atmosphäre hin aus. Die Austrittsöffnung 24 ist so am Ventilschieber 8 platziert, dass sie unabhängig von der Betriebsstellung des Ventilschiebers 8 mit der Atmosphäre in Verbindung steht.

Zur Ausbildung des Entlüftungskanals 22 ist der Ventilschieber 8 zweckmäßigerweise zumindest im Bereich des Steuerabschnittes 14 als Hohlkörper ausgebildet, der einen Hohlraum 25 umgrenzt, welcher den Entlüftungskanal 22 bildet. Beispielsweise hat der Steuerabschnitt 14 eine kastenartige Struktur.

Beim Ausführungsbeispiel verfügt der Steuerabschnitt 14 über zwei sich in der Hauptrichtung 10 mit Abstand gegenüberliegende Wandabschnitte, deren einer die erste Steuerfläche 15a und deren anderer die zweite Steuerfläche 15b bildet. Der erste Wandabschnitt definiert zugleich die Trennwand 18. Der zweite Wandabschnitt ist von der exemplarisch in Form eines Längsschlitzes ausgebildeten Entlüftungsöffnung 23 durchsetzt. Zur gegenseitigen Aussteifung können die beiden Wandabschnitte des Steuerabschnittes 14 mittels einer den Hohlraum 25 durchquerenden, bevorzugt stegartig strukturierten Versteifungsstruktur 26 gegeneinander abgestützt sein, die zweckmäßigerweise ein einstückiger Bestandteil des Steuerabschnittes 14 ist. Diese Versteifungsstruktur 26 bildet exemplarisch auch eine Hülsenstruktur 27, die die Durchlassöffnung 17 umrahmt.

In der Trennstellung des Ventilschiebers 8 kann in dem zweiten Fluidkanal 3 befindliche Druckluft gemäß den Strömungspfeilen 28 durch den Entlüftungskanal 22 hindurch zur Atmosphäre abströmen, um den zweiten Fluidkanal 3 bei gleichzeitiger Absperrung des ersten Fluidkanals 2 zu entlüften.

Zur einfachen Bildung der von dem Ventilschieber 8 durchsetzten Ventilkammer 5 ist das Ventilgehäuse 4 zweckmäßigerweise zweiteilig ausgebildet und enthält zwei jeweils eine der beiden sich gegenüberliegenden Kanalmündungen 6, 7 definierende erste und zweite Gehäusekörper 32a, 32b, die unter Freilassung eines die Ventilkammer 5 definierenden Hohlraumes in einem Fügebereich 33 in der Hauptrichtung 10 aneinandergesetzt sind. Der Fügebereich 33 ist insbesondere von einer zu der Hauptrichtung 10 rechtwinkeligen Fügeebene definiert. Die beiden Gehäusekörper 32a, 32b liegen in dem Fügebereich 33 mit einander zugewandten Fügeflächen aneinander an und sind durch Befestigungsmaßnahmen aneinander fixiert. Diese Befestigungsmaßnahmen bestehen beim Ausführungsbeispiel aus mehreren sich in der Hauptrichtung 10 erstreckenden Befestigungsschrauben 34, könnten aber beispielsweise auch in Form einer Klebeverbindung oder einer sonstigen stoffschlüssigen Verbindung realisiert werden. Beim Zusammenbau des Ventils 1 erfolgt das Zusammenfügen der beiden Gehäusekörper 32a, 32b, nachdem zuvor der Ventilschieber 8 dazwischen platziert wurde.

Der Ventilschieber 8 zeichnet sich durch einen besonders vorteilhaften Aufbau aus. Er umfasst beim Ausführungsbeispiel einen Zentralsteg 35 und einen den Zentralsteg 35 umrahmenden Handhabungsrahmen 36. Diese Komponenten sind bevorzugt einstückig miteinander ausgebildet, wobei der Ventilschieber 8 insgesamt bevorzugt ein einstückiges, insbesondere aus Kunststoffmaterial bestehendes Bauteil ist.

Der Zentralsteg 35 setzt sich aus dem Steuerabschnitt 14 und zwei sich axial, also in der Verstellrichtung 12, beidseits daran anschließenden Endabschnitten zusammen, wobei diese Endabschnitte als Antriebsabschnitte 37 bezeichnet werden, weil über sie die die Umschaltbewegung 13 hervorrufende Antriebskraft in den Steuerabschnitt 14 eingeleitet werden kann. Die beiden Antriebsabschnitte 37 befinden sich bevorzugt außerhalb der Ventilkammer 5, so dass sie eine andere Querschnittsform aufweisen können als der Steuerabschnitt 14 und beim Ausführungsbeispiel insbesondere einen größeren Querschnitt haben. Die Antriebsabschnitte 37 ragen an in der Verstellrichtung 12 einander entgegengesetzten Seiten aus dem Ventilgehäuse 4 heraus, wobei das Maß des momentanen Überstandes davon abhängt, welche Betriebsstellung der Ventilschieber 8 momentan einnimmt. In der Offenstellung des Ventilschiebers 8 ragt der in der Zeichnung unten liegende Antriebsabschnitt 37 weiter als der obere Antriebsabschnitt 37 aus dem Ventilgehäuse 4 heraus. In der Trennstellung gemäß Figuren 5 bis 8 sind die Verhältnisse gerade umgekehrt.

Der Handhabungsrahmen 36 setzt sich aus zwei U-förmigen Handhabungsbügeln 38a, 38b zusammen. Jeder Handhabungsbügel 38a, 38b hat einen ersten und zweiten Bügelschenkel 42a, 42b und einen die beiden Bügelschenkel 42a, 42b einenends miteinander verbindenden Bügelsteg 42c. Bevorzugt gehen diese drei Komponenten 42a, 42b, 42c jeweils rechtwinkelig ineinander über.

Die beiden Handhabungsbügel 38a, 38b sind mit der vom Bügelsteg 42c abgewandten Bügelöffnung voraus einander zugewandt, wobei sich ihre ersten und zweiten Bügelschenkel 42a, 42b jeweils paarweise gegenüberliegen und an den einander zugewandten freien Enden einstückig miteinander ausgebildet sind, so dass sich eine den Handhabungsrahmen 36 definierende einstückige Rahmenstruktur ergibt. Bevorzugt ist dieser Handhabungsrahmen 36 mit einer rechteckigen Gestalt versehen.

Der Zentralsteg 35 erstreckt sich mit bevorzugt gleichem Abstand zu den beiden Bügelstegen 42c zwischen den beiden paarweise miteinander verbundenen ersten beziehungsweise zweiten Bügelschenkeln 42a, 42b, wobei seine Längserstreckung mit derjenigen der Bügelstege 42c zusammenfällt. Zweckmäßigerweise ist der Zentralsteg 35 mit jedem Antriebsabschnitt 37 im Übergangsbereich zwischen den einander zugeordneten ersten und zweiten Bügelschenkeln 42a, 42b einstückig mit beiden Bügelschenkeln 42a, 42b verbunden, die bevorzugt nahtlos ineinander übergehen.

Der Ventilschieber 8 hat mithin zwei sich in der Verstellrichtung 12 erstreckende fensterartige Aussparungen 43a, 43b, die den Zentralsteg 35 beidseits flankieren und die jeweils vom Zentralsteg 35 und von einem der beiden Handhabungsbügel 38a, 38b umrahmt sind.

Das Ventilgehäuse 4 ist gestalterisch so auf die Struktur des Ventilschiebers 8 abgestimmt, dass es mit je einem von zwei Gehäuseabschnitten 44a, 44b durch eine der beiden fensterartigen Aussparungen 43a, 43b hindurchgreift. Der Fügebereich 33 befindet sich im Bereich dieser beiden Gehäuseabschnitte 44a, 44b, die mithin durch den Fügebereich 33 in je zwei Teilabschnitte unterteilt werden, deren einer zum ersten Gehäusekörper 32a und deren anderer zum zweiten Gehäusekörper 32b gehört.

Der Handhabungsrahmen 36 des Ventilschiebers 8 umschließt das Ventilgehäuse 4 in einer zu der Hauptrichtung 10 rechtwinkeligen Ebene in vollem Umfang. Dabei verlaufen die beiden Bügelstege 42c an einer Vorderseite 45a und einer Rückseite 45b des Ventilgehäuses 4 vorbei, während sich andererseits die beiden ersten Bügelschenkel 42a an einer Oberseite 45c und die beiden zweiten Bügelschenkel 42b an einer diesbezüglich entgegengesetzten Unterseite 45d des Ventilgehäuses 4 vorbei erstrecken.

Betrachtet man jeden Handhabungsbügel 38a, 38b separat, so wird das Ventilgehäuse 4 von jedem dieser Handhabungsbügel 38a, 38b in einer zu der Hauptrichtung 10 rechtwinkeligen Ebene außen partiell umgriffen.

Der Handhabungsrahmen 36 kann manuell von außen her betätigt werden, um den Ventilschieber 8 zwischen seinen Betriebsstellungen umzuschalten. Insbesondere eignet sich jeder der vorhandenen Bügelschenkel 42a, 42b dafür, mit Fingern einer Hand eine Drückkraft einzuleiten, um dadurch den Ventilschieber 8 zu verschieben.

Diese Funktionalität ist auch schon dann gegeben, wenn der Ventilschieber 8 außer dem Zentralsteg 35 nur einen einzigen Handhabungsrahmen 36 aufweist. Die Doppelanordnung von Handhabungsrahmen 36 begünstigt allerdings den Zugriff zum Ventilschieber 8 unabhängig von der Einbaulage des Ventils 1. Außerdem wird dadurch die von einem jeweiligen, sich aus zwei ersten Bügelschenkeln 42a und aus zwei zweiten Bügelschenkeln 42b zusammensetzenden Schenkelpaar definierte, in der Verstellrichtung 12 vom Ventilgehäuse 4 wegweisende Betätigungsfläche 46 optimal groß ausgebildet.

Indem der Handhabungsrahmen 36 das Ventilgehäuse 4 komplett umrahmt und außerdem auch noch in dem Fügebereich 33 platziert ist, wird der Fügebereich 33 abgedeckt und entsteht der Eindruck eines monolithischen Aufbaus des Ventilgehäuses 4.

Damit die quer zu der Hauptrichtung 10 gemessenen Abmessungen des Ventils 1 nicht unnötig vergrößert werden, ist es von Vorteil, wenn jeder sich aus einem Bügelsteg 42c und zwei Bügelschenkeln 42a, 42b zusammensetzende Bügelkörper eine flache und insbesondere rechteckige Querschnittskontur hat. Dies begünstigt auch eine dahingehende Ausgestaltung, dass in jeder der beiden möglichen Betriebsstellungen des Ventilschiebers 8 jeweils eines der beiden Schenkelpaare 42a, 42a; 42b, 42b bevorzugt bündig in das Ventilgehäuse 4 versenkt ist. Gemäß Figuren 1 bis 3 kommen hierzu die beiden oben liegenden ersten Bügelschenkel 42a in der Offenstellung vertieft in einer Ausnehmung 47 an der Oberseite 45c des Ventilgehäuses 4 zu liegen, während gemäß Figuren 5 bis 7 die zweiten Bügelschenkel 42b in der Trennstellung in eine an der Unterseite 45d des Ventilgehäuses 4 ausgebildete Ausnehmung 48 flächenbündig eintauchen.

Sowohl an der Vorderseite 45a als auch an der Rückseite 45b weist das Ventilgehäuse 4 zweckmäßigerweise eine sich bevorzugt über den eventuell vorhandenen Fügebereich 33 hinweg erstreckende Führungsnut 52 auf, die einen mit der Verstellrichtung 12 zusammenfallenden Längsverlauf hat und in der sich jeweils einer der beiden Bügelstege 42c längs erstreckt. Jeder Bügelsteg 42c ist dabei von den beiden Nutflanken der Führungsnut 42 flankiert und erfährt in der Hauptrichtung 10 eine Abstützung, so dass eine Linearführung implementiert ist, die bewirkt, dass der Ventilschieber 8 über seine Bügelstege 42c unabhängig von dem Steuerabschnitt 14 linear verschiebbar geführt ist.

Es ist von Vorteil, wenn die Bügelstege 42c im nicht montierten Zustand des Ventilschiebers 8 eine geringfügig zueinander hin gewölbte Längsgestalt haben. Dadurch liegen sie im montierten Zustand des Ventilschiebers 8 mit ihrer dem Ventilgehäuse 4 zugewandten Innenfläche 53 mit einer gewissen Vorspannung an der Außenfläche des Ventilgehäuses 4 an, beim Ausführungsbeispiel am Nutgrund der jeweils zugeordneten Führungsnut 52. Auf diese Weise erfährt der Ventilschieber 8 eine Stabilisierung seiner bezüglich des Ventilgehäuses 4 momentan jeweils eingenommenen Relativposition.

Der Nutzer des Ventils 1 erkennt das Erreichen der jeweils gewünschten Betriebsstellung problemlos daran, dass der Ventilschieber 8 mit den in der momentanen Bewegungsrichtung nacheilenden ersten oder zweiten Bügelschenkeln 42a, 42b am Ventilgehäuse 4 zur Anlage gelangt. Vorteilhaft sind allerdings Fixierungsmaßnahmen, die die jeweils eingestellte Betriebsstellung so fixieren, dass ein versehentliches Verstellen ausgeschlossen ist. Exemplarisch wird dies dadurch realisiert, dass an der Innenfläche 53 eines Bügelsteges 42c oder beider Bügelstege 42c jeweils ein Rastmittel 54 ausgebildet ist, das in jeder zu fixierenden Betriebsstellung mit einem von mehreren in der Verstellrichtung 12 beabstandet zueinander an der Außenfläche des Ventilgehäuses 4 ausgebildeten Gegenrastmitteln 55 in lösbarem Rasteingriff steht.

Exemplarisch sind zur Vorgabe der beiden möglichen Betriebsstellungen pro Bügelschenkel 42a, 42b zwei in der Verstellrichtung 12 beabstandet zueinander angeordnete Gegenrastmittel 55 vorhanden, mit denen das zugeordnete Rastmittel 54 alternativ in lösbaren Eingriff bringbar ist. Das Rastmittel 54 besteht beispielsweise aus einem Vorsprung, der insbesondere rippenartig gestaltet ist, während jedes Gegenrastmittel 55 beim Ausführungsbeispiel aus einer Vertiefung besteht, die vorzugsweise nutartig ausgebildet ist.

Die Rastfunktion ergibt sich beim Ausführungsbeispiel aus der rechtwinkelig zur Verstellrichtung 12 vorhandenen Biegeelastizität der Bügelstege 42c.

Die vom Ventilgehäuse 4 abgewandte großflächige Außenfläche 56 jedes Bügelsteges 42c eignet sich sehr gut zur Anbringung beliebiger Informationen, beispielsweise auch Beschriftungen. Insbesondere kann die Außenfläche 56 zur Anbringung von Schaltstellungsinformationen genutzt werden. Exemplarisch trägt die Außenfläche 56 mindestens eines Bügelsteges 42c zwei in der Verstellrichtung 12 mit Abstand zueinander angeordnete Anzeigemarkierungen 57, die derart beabstandet zueinander angeordnet sind, dass jeweils eine von ihnen in einer der beiden Betriebsstellungen des Ventilschiebers 8 mit einer am Ventilgehäuse 4 neben dem entsprechenden Bügelsteg 42c angeordneten Bezugsmarkierung 58 zusammenwirkt. Das Zusammenwirken geschieht exemplarisch dadurch, dass die betreffende Anzeigemarkierung 57 bezogen auf die Verstellrichtung 12 auf gleicher Höhe mit der Bezugsmarkierung 58 zu liegen kommt. Um eine eindeutige Betriebsstellungsangabe zu erzielen, kann jeder der beiden Anzeigemarkierungen 57 bei Bedarf noch eine Zusatzinformation zugeordnet sein, beispielsweise ein Hinweis wie "Offen" oder "Geschlossen".

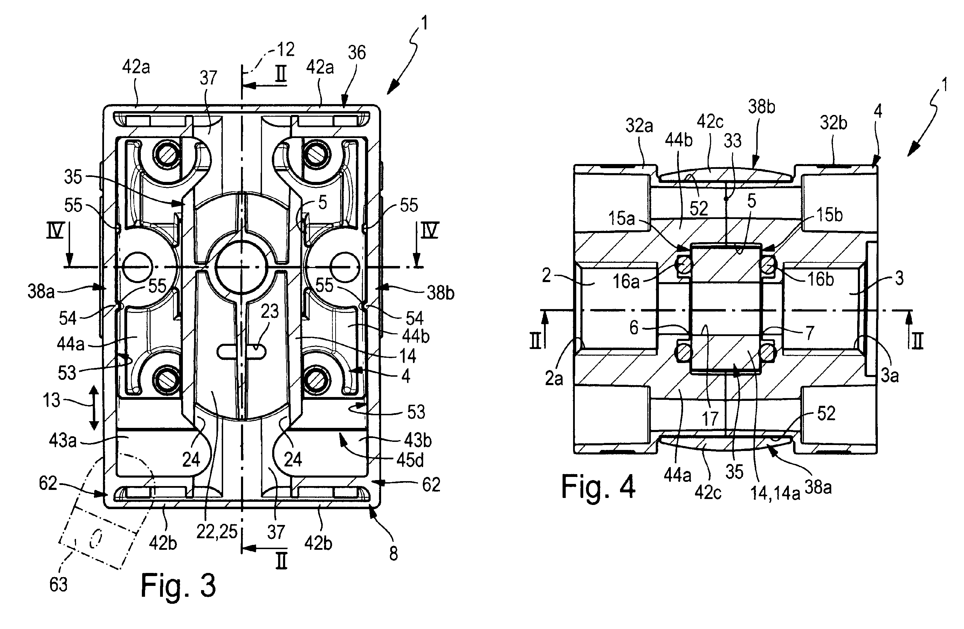

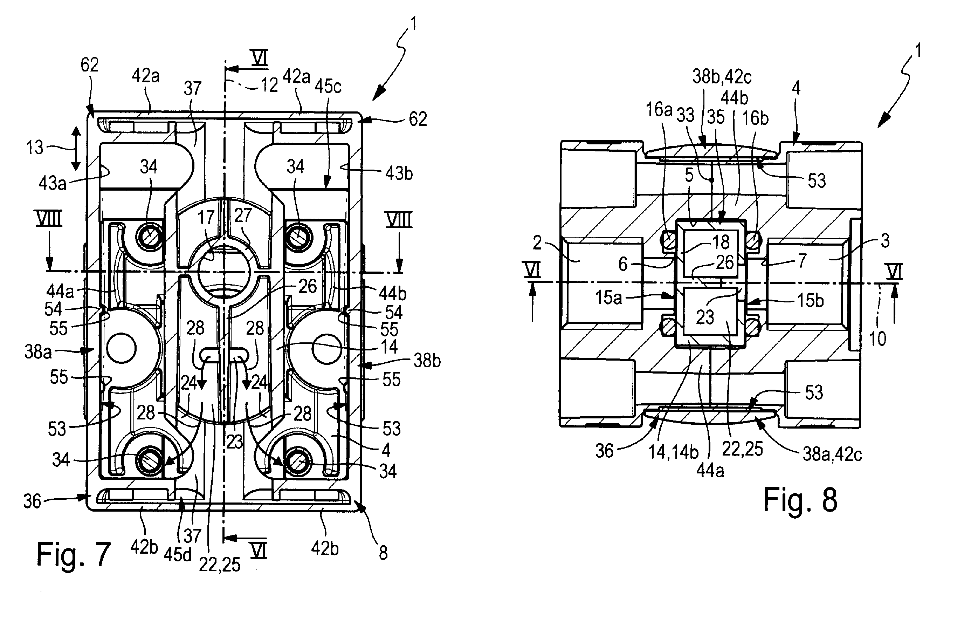

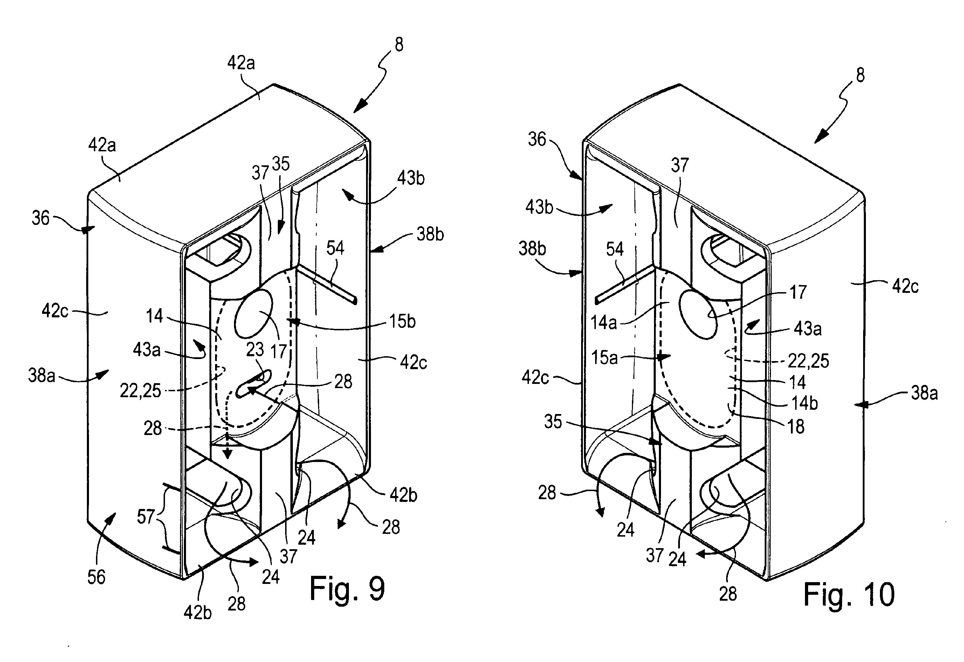

Wie man den Figuren 3 und 7 gut entnehmen kann, ergibt sich in jeder der beiden Betriebsstellungen des Ventilschiebers 8 eine Beabstandung entweder des Paares erster Bügelschenkel 42a, 42a oder des Paares zweiter Bügelschenkel 42b, 42b zum Ventilgehäuse 4 in der Verstellrichtung 12. Mithin ragen die beiden fensterartigen Aussparungen 43a, 43b mit jeweils einem Endabschnitt über das Ventilgehäuse 4 hinaus, der gemeinsam mit dem ihn umgrenzenden Bestandteil des Ventilschiebers 8 und des Ventilgehäuses 4 eine Sicherungsöse 62 bildet. Auf diese Weise ist jedem der vier Eckbereiche des Handhabungsrahmens 36 eine solche Sicherungsöse 62 zugeordnet. Sie lässt sich in vorteilhafter Weise dafür nutzen, ein in Figur 3 anhand eines Bügelschlosses strichpunktiert illustriertes Sicherungselement 63 anzubringen, das durch den zugeordneten Endabschnitt der Aussparung 43a oder 43b hindurchgeführt und um den dort befindlichen Abschnitt des Handhabungsrahmens 36 herumgeschlungen ist.

Das bevorzugt abschließbare Sicherungselement 63 ermöglicht wirksam ein Verhindern einer unautorisierten Betätigung des Ventils 1.

Dadurch, dass durch die besondere Gestaltung des Ventilschiebers 8 insgesamt vier Sicherungsösen 62 vorhanden sind, von denen pro Betriebsstellung jeweils zwei Stück alternativ nutzbar sind, ist unabhängig von der Einbaulage des Ventils 1 eine optimal zugängliche Umschaltsicherung realisierbar.

In Bezug auf den Entlüftungskanal 22 ist noch nachzutragen, dass dessen mindestens eine Austrittsöffnung 24 zweckmäßigerweise im Bereich eines der Antriebsabschnitte 37 platziert ist, vorzugsweise im Übergangsbereich zwischen dem Antriebsabschnitt 37 und dem sich anschließende Bügelschenkel 42a oder 42b. Das zu entlüftende Druckmedium tritt mithin in einem Bereich aus, der von einem Handhabungsbügel 38a, 38b beziehungsweise von dem Handhabungsrahmen 36 umschlossen ist. Dadurch kann ein Abblasen der Druckluft durch einen starken Druckluftstrahl zur näheren Umgebung vermieden werden. Insbesondere können die dem Steuerabschnitt 14 zugewandten Innenflächen der Handhabungsbügel 38a, 38b als Prallflächen fungieren, auf die die beim Entlüften ausströmende Druckluft aufprallt und durch die die Druckluft folglich in nicht störender Weise verteilt wird.

## Patentansprüche

1. Ventil zur Fluidsteuerung, mit einem Ventilgehäuse (4), das eine Ventilkammer (5) definiert, in der sich zwei Kanalmündungen (6, 7) zweier Fluidkanäle (2, 3) in einer Hauptrichtung (10) mit Abstand gegenüberliegen und in der sich zwischen den beiden Kanalmündungen (6, 7) ein Steuerabschnitt (14) eines Ventilschiebers (8) erstreckt, der zur Einstellung verschiedener Betriebsstellungen in einer zu der Hauptrichtung (10) rechtwinkeligen Verstellrichtung (12) relativ zum Ventilgehäuse (4) linear hin und her verschiebbar ist, wobei sich an seinen Steuerabschnitt (14) in der Verstellrichtung (12) axial beidseits jeweils ein zur Einleitung von Verschiebekräften nutzbarer Antriebsabschnitt (37) anschließt, **dadurch gekennzeichnet, dass** der Ventilschieber (8) mindestens einen das Ventilgehäuse (4) in einer zu der Hauptrichtung (10) rechtwinkeligen Ebene außen partiell umgreifenden U-förmigen Handhabungsbügel (38a, 38b) aufweist, dessen zwei Bügelschenkel (42a, 42b) mit jeweils einem der beiden Antriebsabschnitte (37) verbunden sind.

2. Ventil nach Anspruch 1, **dadurch gekennzeichnet, dass** der Ventilschieber (8) zwei das Ventilgehäuse (4) auf einander entgegengesetzten Seiten umgreifende Handhabungsbügel (38a, 38b) aufweist, deren Bügelöffnungen einander zugewandt sind.

3. Ventil nach Anspruch 2, **dadurch gekennzeichnet, dass** die beiden Handhabungsbügel (38a, 38b) gemeinsam einen das Ventilgehäuse (4) in einer zu der Hauptrichtung (10) rechtwinkeligen Ebene vollständig umschließenden Handhabungsrahmen (36) bilden, der zweckmäßigerweise eine im Wesentlichen rechteckige Gestalt hat.

4. Ventil nach einem der Ansprüche 1 bis 3, **dadurch gekennzeichnet, dass** die Antriebsabschnitte (37) des Ventilschiebers (8) aus dem Ventilgehäuse (4) herausragen und außerhalb des Ventilgehäuses (4) mit dem jeweils zugeordneten Bügelschenkel (42a, 42b) verbunden sind.

5. Ventil nach einem der Ansprüche 1 bis 4, **dadurch gekennzeichnet, dass** die in der Verstellrichtung (12) gemessene Länge des mindestens einen Handhabungsbügels (38a, 38b) derart gewählt ist, dass in jeder von zwei einander entgegengesetzten Betriebsstellungen des Ventilschiebers (8) von dem Ventilgehäuse (4) und dem diesbezüglich vorstehenden Handhabungsbügel (38a, 38b) gemeinsam eine Sicherungsöse (62) gebildet wird, durch die ein den Handhabungsbügel (38a, 38b) umschließendes Sicherungselement (63) hindurchführbar ist, insbesondere ein Bügelschloss.

6. Ventil nach einem der Ansprüche 1 bis 5, **dadurch gekennzeichnet, dass** der Ventilschieber (8) in zwei einander entgegengesetzten Betriebsstellungen positionierbar ist, in denen er mit dem jeweils einen Bügelschenkel (42a, 42b) jedes Handhabungsbügels (38a, 38b), insbesondere bündig, in das Ventilgehäuse (4) versenkt ist, während er mit dem jeweils anderen Bügelschenkel (42b, 42a) beabstandet zu dem Ventilgehäuse (4) angeordnet ist.

7. Ventil nach einem der Ansprüche 1 bis 6, **dadurch gekennzeichnet, dass** jeder Handhabungsbügel (38a, 38b) einen seine beiden Bügelschenkel (42a, 42b) verbindenden und sich in der Verstellrichtung (12) erstreckenden Bügelsteg (42c) aufweist, der in einer außen am Ventilgehäuse (4) ausgebildeten Führungsnut (52) verschiebbar gelagert ist.

8. Ventil nach einem der Ansprüche 1 bis 7, **dadurch gekennzeichnet, dass** mindestens ein Handhabungsbügel (38a, 38b) einen seine beiden Bügelschenkel (42a, 42b) verbindenden Bügelsteg (42c) aufweist, an dem mindestens ein Rastmittel (54) zum lösbar verrastenden Zusammenwirken mit dem Ventilgehäuse (4) in mindestens einer Betriebsstellung angeordnet ist und/oder an dem mindestens eine zur Anzeige mindestens einer Betriebsstellung mit einer Bezugsmarkierung (58) des Ventilgehäuses (4) zusammenwirkende Anzeigemarkierung (57) angeordnet ist.

9. Ventil nach einem der Ansprüche 1 bis 8, **dadurch gekennzeichnet, dass** der Handhabungsbügel (38a, 38b) einen aus den beiden Bügelschenkeln (42a, 42b) und aus einem die Bügelschenkel (42a, 42b) miteinander verbindenden Bügelsteg (42c) bestehenden Bügelkörper aufweist, der eine zumindest im Wesentlichen rechteckige, flache Querschnittskontur hat.

10. Ventil nach einem der Ansprüche 1 bis 9, **dadurch gekennzeichnet, dass** das Ventilgehäuse (4) zwei jeweils eine der sich gegenüberliegenden Kanalmündungen (6, 7) aufweisende Gehäusekörper (32a, 32b) aufweist, die unter Bildung der Ventilkammer (5) in einem Fügebereich (33) aneinander angesetzt sind, wobei der mindestens eine Handhabungsbügel (38a, 38b) das Ventilgehäuse (4) unter Abdeckung des Fügebereiches (33) partiell umgreift.

11. Ventil nach einem der Ansprüche 1 bis 10, **dadurch gekennzeichnet, dass** der Steuerabschnitt (14) des Ventilschiebers (8) einen Durchlassabschnitt (14a) mit mindestens einer in einer eine Offenstellung repräsentierenden Betriebsstellung des Ventilschiebers (8) mit den Kanalmündungen (6, 7) der beiden Fluidkanäle (2, 3) fluchtenden und hierbei eine Fluidverbindung zwischen diesen beiden Fluidkanälen (2, 3) herstellenden Durchlassöffnung (17) aufweist.

12. Ventil nach einem der Ansprüche 1 bis 11, **dadurch gekennzeichnet, dass** der Steuerabschnitt (14) einen in einer eine Trennstellung repräsentierenden Betriebsstellung des Ventilschiebers (8) zwischen die beiden Kanalmündungen (6, 7) eingreifenden und hierbei diese beiden Kanalmündungen (6, 7) fluiddicht voneinander abtrennenden Trennabschnitt (14b) aufweist.

13. Ventil nach Anspruch 12, **dadurch gekennzeichnet, dass** im Innern des Ventilschiebers (8) ein Entlüftungskanal (22) ausgebildet ist, der einerseits mit einer Entlüftungsöffnung (23) derart an dem Trennabschnitt (14b) ausmündet, dass er in der Trennstellung des Ventilschiebers (8) mit einem der beiden Fluidkanäle (2, 3) kommuniziert, und der den Steuerabschnitt (14) durchsetzt, wobei er andererseits in einem außerhalb der Ventilkammer (5) liegenden Bereich mit mindestens einer Austrittsöffnung (24) ausmündet, insbesondere im Bereich eines der Antriebsabschnitte (37).

14. Ventil nach Anspruch 13, **dadurch gekennzeichnet, dass** der Ventilschieber (8) zumindest im Bereich seines Steuerabschnittes (14) als Hohlkörper ausgebildet ist, der einen Hohlraum (25) begrenzt, der den Entlüftungskanal (22) bildet.

15. Ventil nach einem der Ansprüche 1 bis 14, **dadurch gekennzeichnet, dass** der Steuerabschnitt (14) des Ventilschiebers (8) plattenförmig ausgebildet ist, wobei sich seine Plattenebene rechtwinkelig zu der Hauptrichtung (10) erstreckt.

## Claims

1. Valve for fluid control, with a valve casing (4) defining a valve chamber (5) in which two passage orifices (6, 7) of two fluid passages (2, 3) lie opposite one another with clearance in a main direction (10), and in which there extends between the two passage orifices (6, 7) a control section (14) of a valve spool (8) which may be moved to and fro linearly for setting different operating positions in a direction of adjustment (12) at right-angles to the main direction (10) relative to the valve casing (4), wherein a drive section (37) axially adjoining its control section (14) in the direction of adjustment (12) on either side may be used to initiate shifting forces, **characterised in that** the valve spool (8) has at least one U-shaped handling bracket (38a, 38b), partially encompassing the valve casing (4) on the outside in a plane at right-angles to the main direction (10), and having two bracket arms (42a, 42b) each connected to one of the two drive sections (37).

2. Valve according to claim 1, **characterised in that** the valve spool (8) has two handling brackets (38a, 38b) encompassing the valve casing (4) on opposite sides, with their bracket openings facing one another.

3. Valve according to claim 2, **characterised in that** the two handling brackets (38a, 38b) together form a handling frame (36), completely enveloping the valve casing (4) in a plane at right-angles to the main direction (10), and expediently having a substantially rectangular shape.

4. Valve according to any of claims 1 to 3, **characterised in that** the drive sections (37) of the valve spool (8) protrude out of the valve casing (4) and are connected outside the valve casing (4) to the respectively assigned bracket arms (42a, 42b).

5. Valve according to any of claims 1 to 4, **characterised in that** the length of the handling bracket or brackets (38a, 38b), measured in the direction of adjustment (12)
, is chosen so that there is formed in each of two opposite operating positions of the valve spool (8), by the valve casing (4) and the handling bracket (38a, 38b) in front of it in conjunction with one another, a securing eye (62) through which a securing element (63) enveloping the handling bracket (38a, 38b) may be guided, in particular a bracket lock.

6. Valve according to any of claims 1 to 5, **characterised in that** the valve spool (8) may be positioned in two opposing operating positions in which it is recessed, in particular flush, in the valve casing (4), with the one bracket arm (42a, 42b) of each handling bracket (38a, 38b), whereas with the other respective bracket arm (42a, 42b) it is arranged with clearance from the valve casing (4).

7. Valve according to any of claims 1 to 6, **characterised in that** each handling bracket (38a, 38b) has a bracket web (42c), connecting its two bracket arms (42a, 42b) and extending in the direction of adjustment (12), which is movably mounted in a guide slot (52) formed on the outside of the valve casing (4).

8. Valve according to any of claims 1 to 7, **characterised in that** at least one handling bracket (38a, 38b) has a bracket web (42c) connecting its two bracket arms (42a, 42b) and on which is provided at least one set of latching means (54) for releasably hatching interaction with the valve casing (4) in at least one operating position and/or on which is provided at least one display marking (57), working on conjunction with a reference marking (58) of the valve casing (4), to indicate at least one operating position.

9. Valve according to any of claims 1 to 8, **characterised in that** the handling bracket (38a, 38b) has a bracket body consisting of the two bracket arms (42a, 42b) and a bracket web (42c) connecting the bracket arms (42a, 42b) to one another, and having an at least substantially rectangular flat cross-sectional contour.

10. Valve according to any of claims 1 to 9, **characterised in that** the valve casing (4) has two casing bodies (32a, 32b), each with one of the two opposite passage orifices (6, 7), and which are fixed together in a joining zone (33) to form the valve chamber (5), wherein the handling bracket or brackets (38a, 38b) partly encompasses or encompass the valve casing (4), covering the joining zone (33).

11. Valve according to any of claims 1 to 10, **characterised in that** the control section (14) of the valve spool (8) has a feed-through section (14a) with at least one feed-through orifice (17) which, in an operating position of the valve spool (8) representing an open position, is flush with the passage orifices (6, 7) of the two fluid passages (2, 3) and at the same time creates a fluidic connection between these two fluid passages (2, 3).

12. Valve according to any of claims 1 to 11, **characterised in that** the control section (14) has a separating section (14b) which, in an operating position of the valve spool (8) representing a separated position, engages between the two passage orifices (6, 7) and in so doing makes a fluid-tight separation between these two passage orifices (6, 7).

13. Valve according to claim 12, **characterised in that** there is formed in the interior of the valve spool (8) a venting passage (22), which on one side opens out with a vent opening (23) at the separating section (14b) in such a way that, in the separated position of the valve spool (8), it communicates with one of the two fluid passages (2, 3) and passes through the control section (14), wherein on the other side it opens out into an area lying outside the valve chamber (5) and with at least one outlet port (24), in particular in the area of one of the drive sections (37).

14. Valve according to claim 13, **characterised in that** the valve spool (8) is in the form of a hollow body, at least in the area if its control section (14), which bounds a hollow space (25) forming the venting passage (22).

15. Valve according to any of claims 1 to 14, **characterised in that** the control section (14) of the valve spool (8) is plate-shaped in form, with the plane of its plate extending at right-angles to the main direction (10).

## Revendications

1. Vanne de commande de fluide avec un boîtier de vanne (4) qui définit une chambre de vanne (5), dans laquelle deux ouvertures de canal (6, 7) de deux canaux fluidiques (2, 3) se font face dans un sens principal (10) à distance et dans laquelle une section de commande (14) d'un coulisseau de vanne (8) s'étend entre les deux ouvertures de canal (6, 7), laquelle peut être déplacée linéairement alternativement pour le réglage de différentes positions de fonctionnement dans un sens de déplacement (12) perpendiculaire par rapport au sens principal (10) par rapport au boîtier de vanne (4), une section d'entraînement (37) utilisable pour l'introduction de forces de déplacement étant contiguë à sa section de commande (14) dans le sens de déplacement (12) axialement de part et d'autre respectivement, **caractérisée en ce que** le coulisseau de vanne (8) présente au moins un étrier de manipulation (38a, 38b) en forme de U entourant à l'extérieur partiellement le boîtier de vanne (4) dans un plan perpendiculaire par rapport au sens principal (10), dont deux branches d'étrier (42a, 42b) sont reliées à respectivement l'une des deux sections d'entraînement (37).

2. Vanne selon la revendication 1, **caractérisée en ce que** le coulisseau de vanne (8) présente deux étriers de manipulation (38a, 38b) entourant le boîtier de vanne (4) sur des côtés en regard l'un de l'autre, dont les ouvertures d'étrier sont tournées l'une vers l'autre.

3. Vanne selon la revendication 2, **caractérisée en ce que** les deux étriers de manipulation (38a, 38b) forment ensemble un cadre de manipulation (36) entourant complètement le boîtier de vanne (4) dans un plan perpendiculaire par rapport au sens principal (10), lequel a de manière appropriée une forme sensiblement rectangulaire.

4. Vanne selon l'une quelconque des revendications 1 à 3, **caractérisée en ce que** les sections d'entraînement (37) du coulisseau de vanne (8) sortent du boîtier de soupape (4) et sont reliées en dehors du boîtier de vanne (4) à la branche d'étrier (42a, 42b) associée respectivement.

5. Vanne selon l'une quelconque des revendications 1 à 4, **caractérisée en ce que** la longueur mesurée dans le sens de déplacement (12) de l'au moins un étrier de manipulation (38a, 38b) est choisie de telle manière que dans chacune des deux positions de fonctionnement en regard l'une de l'autre du coulisseau de vanne (8), un oeillet d'arrêt (62) soit formé conjointement par le boîtier de soupape (4) et l'étrier de manipulation (38a, 38b) dépassant par rapport à celui-ci, par lequel oeillet un élément d'arrêt (63) entourant l'étrier de manipulation (38a, 38b) peut être passé, en particulier un étrier de raccordement.

6. Vanne selon l'une quelconque des revendications 1 à 5, **caractérisée en ce que** le coulisseau de vanne (8) peut être positionné dans deux positions de fonctionnement en regard l'une de l'autre, dans lesquelles il est enfoncé en particulier à fleur avec une branche d'étrier (42a, 42b) respective de chaque étrier de manipulation (38a, 38b) dans le boîtier de vanne (4) alors qu'il est agencé avec l'autre branche d'étrier (42b, 42a) respective à distance du boîtier de vanne (4).

7. Vanne selon l'une quelconque des revendications 1 à 6, **caractérisée en ce que** chaque étrier de manipulation (38a, 38b) présente une nervure d'étrier (42c) reliant ses deux branches d'étrier (42a, 42b) et s'étendant dans le sens de déplacement (12), qui est logée de manière mobile dans une rainure de guidage (52) réalisée à l'extérieur sur le boîtier de vanne (4).

8. Vanne selon l'une quelconque des revendications 1 à 7, **caractérisée en ce qu'**au moins un étrier de manipulation (38a, 38b) présente une nervure d'étrier (42c) reliant ses deux branches d'étrier (42a, 42b), sur laquelle au moins un moyen d'encliquetage (54) est agencé pour la coopération par encliquetage détachable avec le boîtier de vanne (4) dans au moins une position de fonctionnement et/ou est agencé sur l'au moins un marquage d'affichage (57) coopérant pour l'affichage d'au moins une position de fonctionnement avec un marquage de référence (58) du boîtier de vanne (4).

9. Vanne selon l'une quelconque des revendications 1 à 8, **caractérisée en ce que** l'étrier de manipulation (38a, 38b) présente un corps d'étrier se composant des deux branches d'étrier (42a, 42b) et d'une nervure d'étrier (42c) reliant entre elles les deux branches d'étrier (42a, 42b), qui a un contour de section plat, au moins sensiblement rectangulaire.

10. Vanne selon l'une quelconque des revendications 1 à 9, **caractérisée en ce que** le boîtier de vanne (4) présente deux corps de boîtier (32a, 32b) présentant respectivement l'une des ouvertures de canal (6, 7) en regard l'une de l'autre, qui sont placés l'un sur l'autre en formant la chambre de vanne (5) dans une zone de joint (33), l'au moins un étrier de manipulation (38a, 38b) entourant partiellement le boîtier de vanne (4) en recouvrant la zone de joint (33).

11. Vanne selon l'une quelconque des revendications 1 à 10, **caractérisée en ce que** la section de commande (14) du coulisseau de vanne (8) présente une section de passage (14a) avec au moins une ouverture de passage (17) s'alignant dans une position de fonctionnement représentant une position ouverte du coulisseau de vanne (8) avec les ouvertures de canal (6, 7) des deux canaux fluidiques (2, 3) et établissant ici une liaison fluidique entre ces deux canaux fluidiques (2, 3).

12. Vanne selon l'une quelconque des revendications 1 à 11, **caractérisée en ce que** la section de commande (14) présente une section de séparation (14b) s'engageant dans une position de fonctionnement représentant une position de séparation du coulisseau de vanne (8) entre les deux ouvertures de canal (6, 7) et séparant ici ces deux ouvertures de canal (6, 7) de manière étanche au fluide l'une de l'autre.

13. Vanne selon la revendication 12, **caractérisée en ce qu'**à l'intérieur du coulisseau de vanne (8), un canal de ventilation (22) est réalisé, lequel débouche d'une part avec une ouverture de ventilation (23) sur la section de séparation (14b) de telle manière qu'il communique dans la position de séparation du coulisseau de vanne (8) avec l'un des deux canaux fluidiques (2, 3), et qui traverse la section de commande (14), celui-ci débouchant d'autre part dans une zone se trouvant à l'extérieur de la chambre de vanne (5) avec au moins une ouverture de sortie (24), en particulier dans la zone de l'une des sections d'entraînement (37).

14. Vanne selon la revendication 13, **caractérisée en ce que** le coulisseau de vanne (8) est réalisé au moins dans la zone de sa section de commande (14) comme corps creux qui délimite un espace creux (25) qui forme le canal de ventilation (22).

15. Vanne selon l'une quelconque des revendications 1 à 14, **caractérisée en ce que** la section de commande (14) du coulisseau de vanne (8) est réalisée en forme de plaque, son plan de plaque s'étendant perpendiculairement par rapport au sens principal (10).
